# EUROPÄISCHE PATENTSCHRIFT

(11) **EP 3 316 426 B1**
(45) Veröffentlichungstag und Bekanntmachung des Hinweises auf die Patenterteilung: **17.10.2018**
(21) Anmeldenummer: 16195772.5
(22) Anmeldetag: 26.10.2016
(51) Int. Cl.: H01R 43/20, F16B 35/04, H01R 4/34, H01R 13/53, H01R 25/14

(54) **MONTAGEVERFAHREN FÜR EINEN STECKVERBINDER**
METHOD FOR THE ASSEMBLY OF A CONNECTOR
PROCÉDÉ D'ASSEMBLAGE D'UN CONNECTEUR

(43) Veröffentlichungstag der Anmeldung: 02.05.2018
(73) Patentinhaber: Rosenberger Hochfrequenztechnik GmbH & Co. KG, 83413 Fridolfing (DE)
(72) Erfinder: Blakborn, Willem, 83334 Inzell (DE)

(56) Entgegenhaltungen:
- EP-A2- 2 653 735
- WO-A1-2011/061074
- DE-U1-202012 011 985
- US-A- 4 715 104
- US-A- 4 822 291
- US-A- 5 645 457
- Uwe Koerbitz: "Schraubenantriebe", www.konstruktionsatlas.de , 1 September 2017 (2017-09-01), XP055409186, Internet Retrieved from the Internet: URL:https://www.konstruktionsatlas.de/verb indungstechnik/schraube_gewinde_mutter/sch rauben-antriebe.shtml [retrieved on 2017-09-22]

## Beschreibung

### GEBIET DER ERFINDUNG

Die vorliegende Erfindung betrifft ein Montageverfahren für einen Steckverbinder, einen Steckverbinder sowie eine Schraube für einen HV-Steckverbinder.

### TECHNISCHER HINTERGRUND

Die DE 10 2011 004 347 A1 zeigt einen Steckverbinder mit einer Stromleitung und Steckkontakten. Zur Montage des Verbinders werden dessen Einzelteile zusammengesetzt und aneinander befestigt, beispielsweise mittels Verpressen, Verschrauben oder dergleichen.

Die US 4,822,291 zeigt einen Steckverbinder mit einem Steckkontakt und einer Schraube. EP2653735A2 und DE202012011985U1 offenbaren jeweils eine Schraube mit zwei Antrieben für eine elektrische Verbindung. Jedoch handelt es sich hierbei nicht um Steckverbinder.

Während der Montage ist auf Fertigungstoleranzen zu achten. Ein Toleranzausgleich nach Fertigstellung der Montage ist nicht mehr möglich.

Dies ist ein Zustand, den es zu verbessern gilt.

### ZUSAMMENFASSUNG DER ERFINDUNG

Vor diesem Hintergrund liegt der vorliegenden Erfindung die Aufgabe zugrunde, ein Montageverfahren für einen Steckverbinder mit einem verbesserten Toleranzausgleich anzugeben. Erfindungsgemäß wird diese Aufgabe durch ein Montageverfahren den Merkmalen des Patentanspruchs 1 und/oder durch einen Steckverbinder mit den Merkmalen des Patentanspruchs 8 gelöst.

Demgemäß ist vorgesehen:
- ein Montageverfahren für einen Steckverbinder, insbesondere für einen HV-Steckverbinder, mit einem Stromleiter und einem Steckkontakt, welches die folgenden Schritte umfasst: Bereitstellen einer Schraube mit einem ersten Antrieb und mit einem zweiten Antrieb, welcher zu dem ersten Antrieb gegenüberliegend ausgebildet ist; Herstellen einer Verbindung mit Spiel zwischen dem Stromleiter und dem Steckkontakt mittels der Schraube, indem die Schraube in jeweils ein Durchgangsloch des Stromleiters und des Steckkontaktes eingesetzt wird und an ihrem ersten Antrieb in eine erste Richtung gedreht wird; Einsetzen der Schraube und des Steckkontaktes in ein Steckverbindergehäuse; Festziehen der Verbindung mit einem Werkzeug zwischen dem Stromleiter und dem Steckkontakt, indem die Schraube an ihrem zweiten Antrieb in eine zweite zu der ersten Richtung entgegengesetzten Richtung gedreht wird; und
- ein Steckverbinder welcher einen Stromleiter, einem Steckkontakt und eine Schraube aufweist, wobei die Schraube in jeweils ein Durchgangsloch des Stromleiters und des Steckkontaktes eingesetzt ist und an einem Schraubenkopf einen ersten Antrieb und an einem zu dem Schraubenkopf gegenüberliegendem Schraubenfuß einen zweiten Antrieb aufweist, wobei der Steckverbinder ein Steckverbindergehäuse aufweist, wobei der Steckkontakt in dem Steckverbindergehäuse mittels eines Rastmechanismus befestigt ist.

Die der vorliegenden Erfindung zugrunde liegende Idee besteht darin, Einzelteile eines Steckverbinders derart vorzumontieren, dass diese mit einem Spiel aneinander befestigt sind. Die vormontierten Einzelteile des Steckverbinders werden im Folgenden als Baugruppe bezeichnet. Nach dem die Baugruppe vormontiert wurde, kann diese in einer Komponente verbaut werden. Dabei ist anzustreben, dass für die Endmontage der Baugruppe in der Komponente eine möglichst geringe Anzahl an Prozessschritten erforderlich ist.

Die vorliegende Erfindung ermöglicht eine Endmontage der Komponente bzw. nahezu Endmontage, in welche die vormontierte Baugruppe eingesetzt ist. Aufgrund des Spiels der Einzelteile des Steckverbinders der Baugruppe ist diese geeignet Fertigungstoleranzen der Komponente auszugleichen. Nach der Montage der Baugruppe in der Komponente kann sich jedoch ergeben, dass die Baugruppe an konventionellen Endmontagepunkten nicht mehr zugänglich ist. Die vorliegende Erfindung sieht deshalb eine Endmontage der Baugruppe in der Komponente über weitere Montagepunkte, welche bis zum Verstecken des Steckverbinders in der Komponente zugänglich sind, vor.

Die vorliegende Erfindung ermöglicht insbesondere, dass die Baugruppe von einem ersten Hersteller, zum Beispiel einem Zulieferer, montiert wird und an einen zweiten weiterverarbeitenden Hersteller geliefert wird. Der zweite Hersteller kann die vormontierte Baugruppe dann in seine hauseigenen Komponenten einsetzen und den Steckverbinder in der Komponente endmontieren.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Erfindungsgemäß wird die vormontierte Baugruppe an der Schraube und an dem Steckkontakt in ein Steckverbindergehäuse eingesetzt. Typischerweise ist dabei auch der Stromleiter über die Schraube an dem Steckkontakt befestigt. Der Stromleiter wird in der Regel jedoch nicht in das Steckverbindergehäuse eingesetzt, sonder führt vom Äußerem des Steckverbindergehäuses zum Steckkontakt.

Auf diese Weise ist die Montage des Steckverbinders bereits vor der Montage in einer Komponente weit fortgeschritten und die Baugruppe bereits vor der Montage in der Komponente durch das Gehäuse geschützt.

Gemäß einer bevorzugten Weiterbildung der Erfindung umfasst das Montageverfahren zusätzlich das Befestigen des Steckverbinders in einer Komponente, derart dass die Schraube ausschließlich über den zweiten Antrieb drehbar ist. Auf diese Weise wirkt sich die Erfindung besonders vorteilhaft aus. Somit kann der Steckverbinder auch weitestgehend unzugänglich in der Komponente verbaut werden.

Auf diese Weise kann die Montage des Steckverbinders in der Komponente beendet werden, nachdem die Komponente bereits nahezu vollständig montiert ist. Dies ermöglicht einen verbesserten Toleranzausgleich von Fertigungstoleranzen des Steckverbinders und der Komponente.

Gemäß einer bevorzugten Weiterbildung der Erfindung wird der Steckverbinder in der Komponente mittels einer Zentrierhilfe axial zentriert. Auf diese Weise sollen mechanische Lasten auf die vormontierte Baugruppe bzw. Steckverbinder verringert werden. Besonders das Spiel zwischen den Einzelteilen der vormontierten Baugruppe kann zu mechanischen Lasten bzw. einer Verkantung der Baugruppe in der Komponente führen. Mechanische Lasten wirken sich nachteilig auf die elektrischen Eigenschaften des Steckverbinders aus.

Die Zentrierhilfe ist eingerichtet, die Steckverbindung bereits unmittelbar nach der Vormontage in ihre Endposition zu bringen.

Gemäß einer weiter bevorzugten Ausführungsform der Erfindung wird eine Schraube bereitgestellt, dessen erster Antrieb in einem Schraubenkopf ausgebildet ist und dessen zweiter Antrieb in einem Schraubenfuß ausgebildet ist. Diese Konfiguration der Schraube hat sich als besonders zweckmäßig erwiesen, obgleich der zweite Antrieb der Schraube beispielsweise auch auf einer Unterseite des Schraubenkopfes ausgebildet sein kann.

Gemäß einer bevorzugten Weiterbildung der Erfindung wird vor dem Festziehen der Verbindung eine Schutzkappe auf dem Steckverbindergehäuse aufgebracht. Die Schutzkappe ist derart ausgebildet, dass sie den zweiten Antrieb der Schraube nicht verdeckt und den Steckverbinder zumindest teilweise, beispielsweise vor einem Verkratzen durch ein Werkzeug, schützt. Auf diese Weise kann gleichzeitig eine Kodierung für die Montage des Steckverbinders in der Komponente bereitgestellt werden.

Gemäß einer bevorzugten Weiterbildung umfasst die Erfindung das Festziehen der Verbindung über einen Zugang an einer Steckerschnittstelle, insbesondere einer Buchse. Auf diese Weise kann eine Endmontage des Steckverbinders in der Komponente gewährleistet werden, wenn der Steckverbinder für ein Werkzeug nur teilweise zugänglich ist. Der Zugang über die Buchse ist besonders zweckmäßig, da die Buchse bis zum Verstecken des Steckverbinders ohnehin frei und zugänglich zu bleiben hat, und der Steckverbinder vor Fertigstellung der Montage in der Regel nicht versteckt werden wird.

Gemäß einer bevorzugten Weiterbildung des erfindungsgemäßen Verfahrens ist der Steckkontakt während dem Festziehen der Verbindung gegen ein Mitdrehen mit der Schraube gesichert. Dabei sind verschiedene Möglichkeiten den Steckkontakt gegen ein Mitdrehen zu sichern denkbar. Beispielsweise kann der Steckkontakt in dem Steckverbindergehäuse radial fixiert sein. Alternativ kann vorgesehen sein, dass die Schutzkappe den Steckkontakt radial fixiert. Weiter alternativ ist auch denkbar, dass vor dem Festziehen der Verbindung der Steckkontakt von einer Mutter gesichert wird.

Erfindungsgemäß verrastet der Steckverbinder mit dem Steckkontakt an dem Steckverbindergehäuse.

Beispielsweise kann ein Steckkontakt mit einer Rastnut und ein Steckverbindergehäuse mit wenigstens einer Federlasche vorgesehen sein, wobei die Rastnut und die Federlasche ineinander eingreifen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Figur 1: zeigt eine perspektivische Ansicht eines Steckverbinders gemäß einer Ausführungsform der Erfindung sowie ein Werkzeug;
- Figur 2: zeigt eine schematische Schnittsicht eines Steckverbinders gemäß einer Ausführungsform der Erfindung während dem Montageprozess;
- Figur 3: zeigt eine perspektivische Ansicht eines Steckverbinders gemäß einer Ausführungsform der Erfindung und ein Werkzeug;
- Figur 4: zeigt eine Baugruppe gemäß einer Ausführungsform der Erfindung sowie ein Steckverbindergehäuse gemäß einer Ausführungsform der Erfindung während der Montage;
- Figur 5: zeigt einen Steckverbinder gemäß einer Ausführungsform der Erfindung sowie ein Werkzeug während der Montage;
- Figur 6: zeigt einen Steckverbinder gemäß einer Ausführungsform der Erfindung nach Abschluss der Montage;
- Figur 7: zeigt eine Schraube sowie ein Werkzeug.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

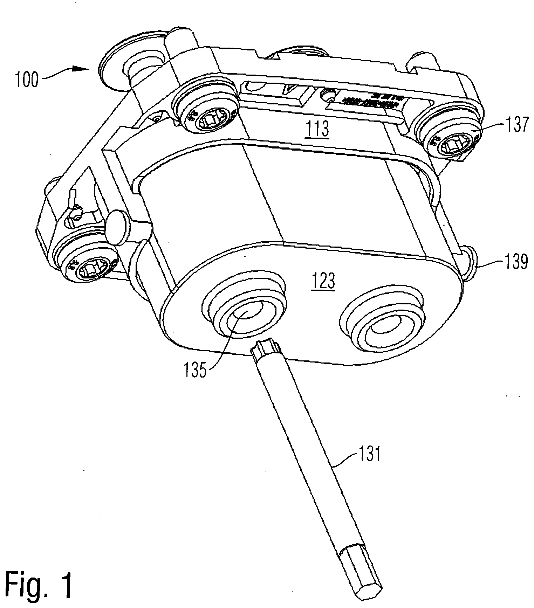

Figur 1 zeigt eine perspektivische Ansicht eines Steckverbinders 100 gemäß einer Ausführungsform der Erfindung sowie ein Werkzeug 131. Das Werkzeug 131 ist als Torx-Schraubenschlüssel ausgebildet.

Der Steckverbinder 100 weist eine Baugruppe 115 mit einer Schraube 105, einem Stromleiter 101 und einem Steckkontakt 103 (in Figur 1 nicht dargestellt), ein Steckverbindergehäuse 113 und eine Schutzkappe 123 auf.

Figur 1 zeigt den Steckverbinder 100 während dem Montageprozess. Dementsprechend befindet sich in dem Steckverbindergehäuse 113 die vormontierte Baugruppe 115. Um die Baugruppe 115 bzw. den Steckverbinder 100 fertig zu montieren, wird die Schraube mit dem Werkzeug 131 fest gezogen. Um den Steckverbinder 100, besonders dessen Oberfläche, vor einem Verkratzen durch das Werkzeug zu schützen, wurde die Schutzkappe 123 auf das Steckverbindergehäuse 113 aufgesetzt. Es kann vorgesehen sein, die Schutzkappe 123 nach Beendigung der Montage zu entfernen oder sie zum weiteren Schutz des Steckverbinders 100 auf dem Steckverbindergehäuse 113 zu belassen. Um die Zugänglichkeit für das Werkzeug 131 ins Innere des Steckverbinders 100 zu gewährleisten, weist die Schutzkappe 123 zwei Öffnungen 135 auf.

Figur 1 sowie die folgenden Figuren zeigen jeweils einen zweipoligen Steckverbinder. Der Fachmann versteht jedoch, dass von der Erfindung genauso ein einpoliger Steckverbinder bzw. Steckverbinder mit einer beliebigen Anzahl an Polen umfasst sind.

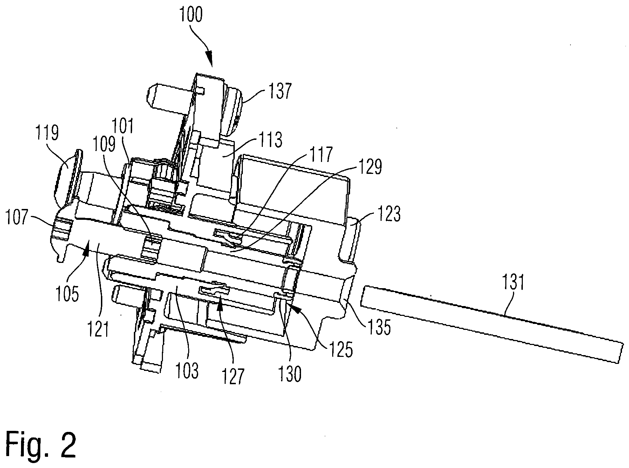

Figur 2 zeigt einen Steckverbinder 100 während dem Montageprozess, genauer gesagt bevor die Verbindung fest gezogen wird.

In Figur 2 ist der Steckverbinder 100 mit dem Steckverbindergehäuse 113 und der Baugruppe 115 dargestellt. Die Baugruppe 115 umfasst einen Stromleiter 101, welcher in Figur 2 als Stromschiene ausgebildet ist, eine Schraube 105, sowie einen Steckkontakt 103.

Die Schraube 105 umfasst einen Schraubenkopf 119 mit einem ersten Antrieb 107 sowie einen Schraubenfuß 121 mit einem zweiten Antrieb 109. Aufgrund der zwei gegenüberliegenden Antriebe 107 und 109 kann die Schraube von zwei Seiten festgezogen werden, wobei die Drehrichtung des Werkzeugs 131 zum Festziehen der Schraube 105 an dem ersten Antrieb 107 zu der Drehrichtung zum Festziehen der Schraube an dem zweiten Antrieb 109 entgegengesetzt ist. Üblicherweise wird die Schraube 105 an ihrem Schraubenkopf 119 durch eine Rechtsdrehung festgezogen und an ihrem Schraubenfuß 121 durch eine Linksdrehung.

Der Stromleiter 101, der von der Schraube 105 auf dem Steckkontakt 103 gehalten wird, ist in seiner Ausdehnung nur teilweise dargestellt. Allerdings kann es aufgrund des Gewichts des Stromleiters 101 und der Montage mit Spiel zu einem Drehmoment kommen, welches auf die Schraube 105 bzw. auf dem Steckkontakte 103 wirkt. Zum Ausgleich eines möglichen Drehmoments der montierten Baugruppe 115 in dem Steckverbindergehäuse 113 ist die Zentrierhilfe 117 vorgesehen, welche in Figur 2 als ringförmig angeordnete Federlaschen bzw. Federkorb ausgebildet ist.

Die Federlaschen 117 stehen mit der Rastnut 129 in Verbindung und bilden auf diese Weise den Rastmechanismus 127. Der Rastmechanismus 127 bewirkt, dass der Kontakt 103 bzw. die Baugruppe 115 in ihrer Position in dem Steckverbindergehäuse 113 verrastet. Auf diese Weise kann der Federkontakt 103 lediglich in eine Richtung, nämlich in das Steckverbindergehäuse 113 hinein, geschoben werden, wohingegen der Steckkontakt 103 gegen ein Herausfallen aus dem Steckverbindergehäuse 113 gesichert ist. Anstatt der Rastnut 129 können auch mehrere axial versetzte zueinander konzentrische Rastnuten vorgesehen sein.

Ferner kann vorgesehen sein, dass der Steckkontakt 103 mittels des Rastmechanismus 127 radial verrastet, derart das der Steckkontakt gegen eine Drehung gesichert ist, insbesondere während dem Festziehen der Verbindung.

Alternativ kann der Steckkontakt auch durch die Eingreifkante 130, die in die Schutzkappe 123 eingreift, gegen eine Drehung gesichert sein.

Der Steckverbinder 100 ist eingerichtet in einer Komponente (nicht dargestellt) montiert zu werden. Hierfür sind die konventionellen Schrauben 137 vorgesehen, an welchen der Steckverbinder 100 mit der Komponente befestigt werden kann. Es kann vorgesehen sein, dass der Steckverbinder 100, nachdem er mit einer Komponente verschraubt wurde, an dem Schraubenkopf 119 bzw. an dem ersten Antrieb 107 der Schraube 105 nicht mehr zugänglich ist. Aus diesem Grunde sieht die vorliegende Erfindung vor, den Steckverbinder 100 über den zweiten Antrieb 109 der Schraube 105 festzuziehen.

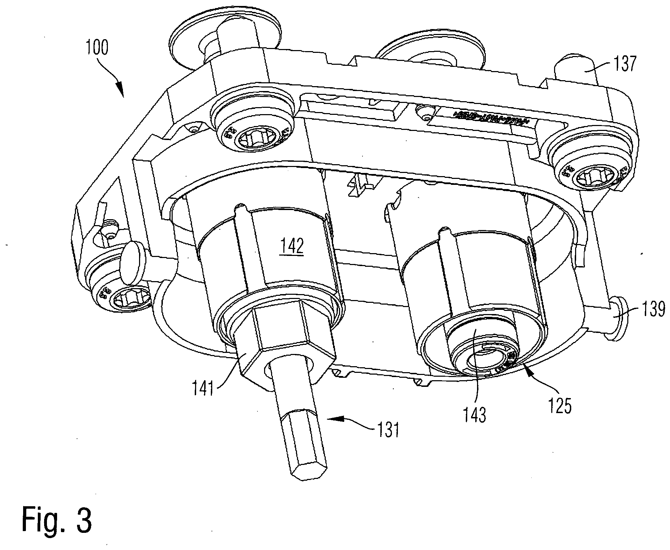

Figur 3 zeigt einen ähnlichen Steckverbinder wie Figur 1, jedoch umfasst der Steckverbinder in Figur 3 keine Schutzkappe. Stattdessen ist ersichtlich, dass der Steckverbinder 100 als HV-Steckverbinder ausgebildet ist und einen Berührschutz mit einem Berührschutzpin 143 und einer seitlichen Wandung 142 aufweist. Zudem ist der Steckkontakt 103 von der Mutter 141 gegen ein Mitdrehen mit der Schraube gesichert.

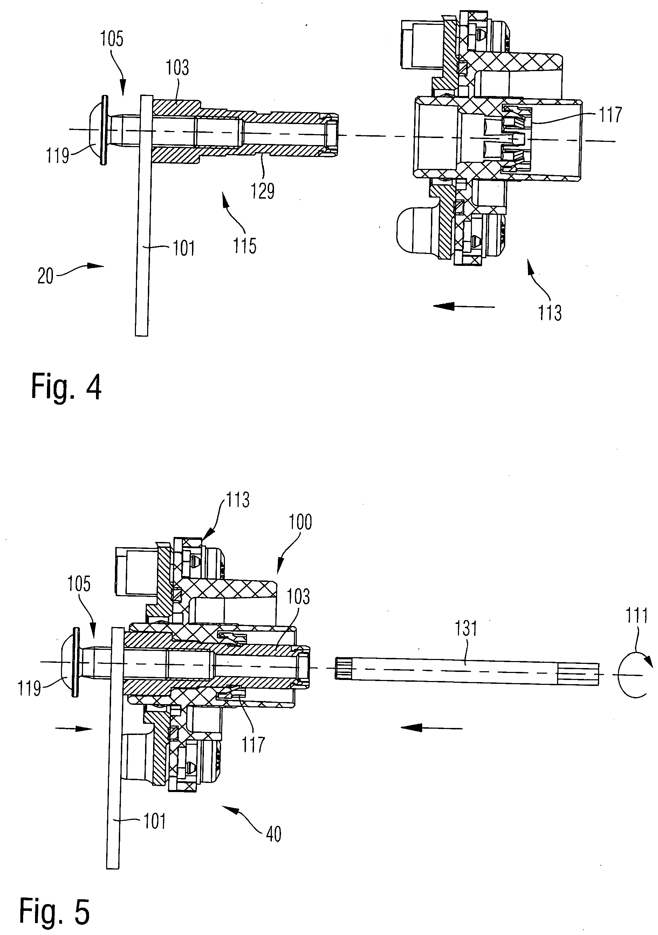

Die Figuren 4-6 zeigen einzelne Schritte des Herstellungsverfahrens gemäß einer Ausführungsform der Erfindung in einer schematischen Schnittsicht.

Figur 4 zeigt das Steckverbindergehäuse 113 sowie getrennt davon die Baugruppe 115 mit dem Innenleiter 101, dem Steckkontakt 103 und der Schraube 105. Entsprechend dem Montageschritt 20 wird die Baugruppe 115 vormontiert, indem der Stromleiter 101, der Steckkontakt 103 und die Schraube 105 mit Spiel aneinander montiert werden.

Figur 5 zeigt einen Steckverbinder 100, nach dem Montageschritt 40, bei dem die Schraube 105 und der Steckkontakt 103 in das Steckverbindergehäuse 113 eingesetzt werden. Somit ist der Steckkontakt 103 in dem Steckverbindergehäuse 113 an den Federlaschen 117 verrastet. Dennoch existiert zwischen der Schraube 105 und dem Innenleiter 101 ein Spiel, da die Schraube 105 nicht festgezogen ist.

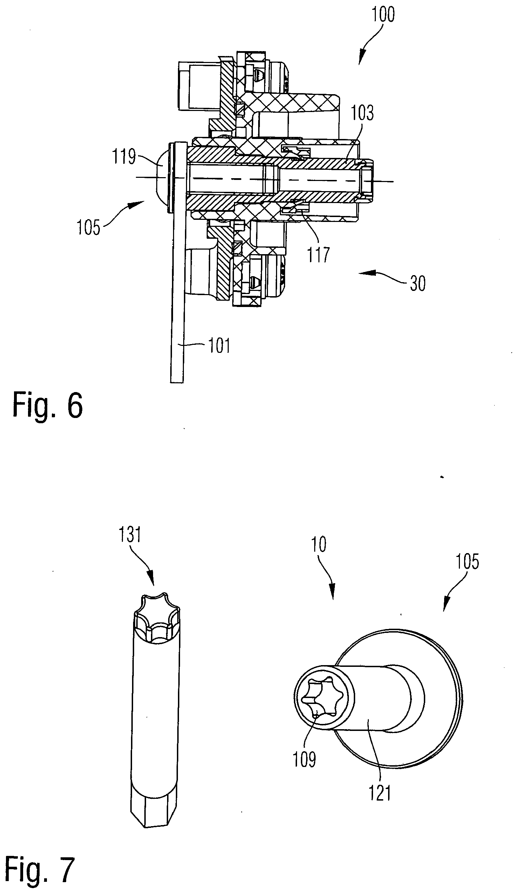

Figur 6 zeigt den Steckverbinder gemäß einer Ausführungsform der Erfindung nach Beendigung des Montageverfahrens gemäß einer Ausführungsform der Erfindung durch den Schritt 30. In dem Schritt 30 wurde die Schraube 105 von dem Werkzeug 131 an ihrem zweiten Antrieb festgezogen. Folglich existiert zwischen dem Stromleiter 101, der Schraube 105 und dem Steckkontakt 103 kein Spiel mehr.

Figur 7 zeigt ein Werkzeug 131, welches als konventioneller Torx-Schlüssel ausgebildet ist. Zudem zeigt Figur 7, getrennt von dem Werkzeug 131, die Schraube 105, bzw. den Montageschritt 10, das Bereitstellen einer Schraube mit zwei Antrieben 107, 109. Die Schraube 105 ist in Figur 7 von ihrer Unterseite dargestellt, sodass der zweite Antrieb 109 in dem Schraubenfuß 121 ersichtlich ist.

### Bezugszeichenliste

- 10: Bereitstellen einer Schraube
- 20: Herstellen einer Verbindung mit Spiel
- 30: Festziehen der Verbindung
- 40: Einsetzen in ein Steckverbindergehäuse

- 100: Steckverbinder
- 101: Stromleiter
- 103: Steckkontakt
- 105: Schraube
- 107: erster Antrieb
- 109: zweiter Antrieb
- 111: entgegengesetzte Richtung
- 113: Steckverbindergehäuse
- 115: Baugruppe
- 117: Zentrierhilfe
- 119: Schraubenkopf
- 121: Schraubenfuß
- 123: Schutzkappe
- 125: Buchse
- 127: Rastmechanismus
- 129: Rastnut
- 130: Eingreifkante
- 131: Werkzeug
- 135: Öffnung
- 137: konventionelle Schraube
- 139: Kodierung
- 141: Mutter
- 142: Wandung
- 143: Berührschutzpin

## Patentansprüche

1. Montageverfahren für einen Steckverbinder (100), insbesondere für einen HV-Steckverbinder, mit einem Stromleiter (101) und einem Steckkontakt (103), welches die folgenden Schritte umfasst:
- Bereitstellen einer Schraube (105) mit einem ersten Antrieb (107) und mit einem zweiten Antrieb (109), welcher zu dem ersten Antrieb gegenüberliegend ausgebildet ist (10);
- Herstellen einer Verbindung mit Spiel zwischen dem Stromleiter und dem Steckkontakt mittels der Schraube, indem die Schraube in jeweils ein Durchgangsloch des Stromleiters und des Steckkontaktes eingesetzt wird und an ihrem ersten Antrieb in eine erste Richtung gedreht wird (20) ;
- Festziehen der Verbindung zwischen dem Stromleiter und dem Steckkontakt mit einem Werkzeug (131), indem die Schraube an ihrem zweiten Antrieb in eine zweite zu der ersten Richtung entgegengesetzten Richtung (111) gedreht wird (30) ;
- Einsetzen der Schraube und des Steckkontaktes in ein Steckverbindergehäuse (113) nach dem Herstellen der Verbindung mit Spiel (40).

2. Montageverfahren nach Anspruch 1, welches zusätzlich umfasst:
- Befestigen des Steckverbinders in einer Komponente, derart dass die Schraube ausschließlich über den zweiten Antrieb drehbar ist.

3. Montageverfahren nach Anspruch 2, wobei das Verfahren zusätzlich umfasst:
- Axiales Zentrieren des Steckverbinders in der Komponente mittels einer Zentrierhilfe (117).

4. Montageverfahren nach einem der vorstehenden Ansprüche, wobei eine Schraube bereitgestellt wird, dessen erster Antrieb in einem Schraubenkopf (119) ausgebildet ist und dessen zweiter Antrieb in einem Schraubenfuß (121) ausgebildet ist.

5. Montageverfahren nach einem der vorstehenden Ansprüche, wobei vor dem Festziehen der Verbindung eine Schutzkappe (123) auf dem Steckverbindergehäuse aufgebracht wird, welche den zweiten Antrieb der Schraube nicht verdeckt.

6. Montageverfahren nach einem der vorstehenden Ansprüche, wobei das Festziehen der Verbindung über einen Zugang an einem Steckerschnittstelle, insbesondere einer Buchse (125), erfolgt.

7. Montageverfahren nach einem der vorstehenden Ansprüche, wobei der Steckkontakt während dem Festziehen der Verbindung gegen ein Mitdrehen mit der Schraube durch die Schutzkappe und/oder durch das Steckverbindergehäuse und/oder durch eine Mutter (141) gesichert ist.

8. Steckverbinder (100) welcher einen Stromleiter (101), einen Steckkontakt (103) und eine Schraube (105) aufweist, wobei die Schraube in jeweils ein Durchgangsloch des Stromleiters und des Steckkontaktes eingesetzt ist und an einem Schraubenkopf einen ersten Antrieb (107) und an einem zu dem Schraubenkopf (119) gegenüberliegendem Schraubenfuß (121) einen zweiten Antrieb (109) aufweist ;
wobei der Steckverbinder ein Steckverbindergehäuse (113) aufweist, wobei der Steckkontakt in dem Steckverbindergehäuse mittels eines Rastmechanismus (127; 117, 129) befestigt ist.

9. Steckverbinder nach Anspruch 8, wobei der Rastmechanismus an dem Steckkontakt eine Rastnut (129) und an dem Steckverbindergehäuse wenigstens eine Federlasche (117), welche in die Rastnut eingreift, aufweist.

## Claims

1. Assembly method for a plug connector (100), in particular for an HV connector, comprising a conductor (101) and a plug contact (103), comprising the following steps:
- providing a screw (105) with a first drive (107) and with a second drive (109), wherein the latter is formed opposite to the first drive (10);
- making a connection with play between the conductor and the plug contact by means of the screw, wherein the screw is respectively inserted through a through-hole of the conductor and the plug contact and is rotated in a first direction (20) in its first drive;
- tightening the connection (30) between the conductor and the plug contact with a tool (131), wherein the screw is rotated in its second drive in a second direction opposite to the first direction (111);
- inserting the screw and the plug contact in a connector housing (113) after making the connection with play (40).

2. Assembly method according to claim 1, which additionally comprises:
- attaching the connector in a component, so that the screw is exclusively rotatable via the second drive.

3. Assembly method according to claim 2, wherein the method additionally comprises:
- axial centering of the connector in the component by means of a centering aid (117).

4. Assembly method according to one of the preceding claims, wherein a screw is provided, whose first drive is formed in a screw head (119) and whose second drive is formed in a screw foot (121).

5. Assembly method according to one of the preceding claims, wherein, prior to tightening the connection, a protective cap (123), which does not interfere with the second drive of the screw, is applied to the connector housing.

6. Assembly method according to one of the preceding claims, wherein tightening the connection takes place via an access to a connector interface, in particular a socket (125).

7. Assembly method according to one of the preceding claims, wherein the plug contact is secured during tightening of the connection against rotation with the screw through the protective cap and/or through the connector housing and/or through a nut (141).

8. Plug connector (100) which has a conductor (101), a plug contact (103) and a screw (105), wherein the screw is respectively inserted through a through-hole of the conductor and the plug contact, and comprises a first drive (107) on a screw head and a second drive (109) on a screw foot (121) opposite the screw head (119);
wherein the plug connector has a connector housing (113), wherein the plug contact is attached in the connector housing by means of a latching mechanism (127, 117, 129).

9. Plug connector according to claim 8, wherein the latching mechanism on the plug contact comprises a latching groove (129) and at least one spring tab (117) on the connector housing which engages in the latching groove.

## Revendications

1. Procédé de montage pour un connecteur (100), plus particulièrement pour un connecteur HV, avec un conducteur électrique (101) et un contact enfichable (103), qui comprend les étapes suivantes :
- préparation d'une vis (105) avec un premier entraînement (107) et avec un deuxième entraînement (109), qui disposé de manière opposée (10) au premier entraînement ;
- établissement d'une liaison avec un jeu entre le conducteur électrique et le contact enfichable au moyen de la vis, grâce au fait que la vis est insérée dans un trou de passage du conducteur électrique et du contact enfichable et est tournée (20) dans un premier sens au niveau de son premier entraînement ;
- serrage de la liaison entre le conducteur électrique et le contact enfichable avec un outil (131), grâce au fait que la vis est tournée (30) dans un deuxième sens (111), opposé au premier sens, au niveau de son deuxième entraînement ;
- insertion de la vis et du contact enfichable dans un boîtier de connecteur (113) après l'établissement de la liaison avec un jeu (40).

2. Procédé de montage selon la revendication 1, qui comprend en outre :
- fixation du connecteur dans un composant de façon à ce que la vis peut tourner exclusivement par l'intermédiaire du deuxième entraînement.

3. Procédé de montage selon la revendication 2, ce procédé comprenant en outre :
- le centrage axial du connecteur dans le composant au moyen d'une aide au centrage (117).

4. Procédé de montage selon l'une des revendications précédentes, une vis étant préparée, dont le premier entraînement est réalisé dans une tête de vis (119) et dont le deuxième entraînement est réalisé dans un pied de vis (121).

5. Procédé de montage selon l'une des revendications précédentes, moyennant quoi,
avant le serrage de la liaison, un capuchon de protection (123) est monté sur le boîtier de connecteur, qui ne dissimule pas le deuxième entraînement de la vis.

6. Procédé de montage selon l'une des revendications précédentes, moyennant quoi le serrage de la liaison a lieu par l'intermédiaire d'un accès à une interface de connecteur, plus particulièrement d'une douille (125).

7. Procédé de montage selon l'une des revendications précédentes, moyennant quoi le contact enfichable est sécurisé pendant le serrage de la liaison contre une rotation avec la vis par le capuchon de protection et/ou par le boîtier de connecteur et/ou par un écrou (141).

8. Connecteur (100) qui comprend un conducteur électrique (101), un contact enfichable (103) et une vis (105), la vis étant insérée dans un trou de passage du conducteur électrique et du contact enfichable et comprenant, au niveau d'une tête de vis, un premier entraînement (107) et, au niveau d'un pied de vis (121), opposé à la tête de vis (119), un deuxième entraînement (109) ;
le connecteur comprenant un boîtier de connecteur (113), le contact enfichable étant fixé dans le boîtier de connecteur au moyen d'un mécanisme d'encliquetage (112 ; 117, 119).

9. Connecteur selon la revendication 8, le mécanisme d'encliquetage comprenant au niveau du contact enfichable une rainure d'encliquetage (129) et au niveau du boîtier de connecteur au moins une patte à ressort (117) qui s'emboîte dans la rainure d'encliquetage.
